# EUROPEAN PATENT APPLICATION

(11) **EP 3 324 200 A1**
(43) Date of publication of application: **23.05.2018**
(21) Application number: 16425105.0
(22) Date of filing: 16.11.2016
(51) Int. Cl.: G01S 5/16, A63B 71/06, G06T 7/20, G06T 7/70

(54) **IMPROVED RECREATIONAL/SPORT APPARATUS**

(71) Applicant: Steltronic S.P.A., 25082 Botticino Sera (BS) (IT)
(72) Inventor: Simeone, Roberto, 25123 Brescia (IT)
(74) Representative: Zambardino, Umberto

(57) **Abstract**

A recreational/ sport apparatus (1) comprises a playing field (2), on which a target (3) is arranged protruding from a surface (S) of the playing field (2), and a ball (4) adapted to be shot toward the target (3).

Conveniently, the apparatus (1) comprises means apt to perform the reconstruction of the trajectory (γ) of the ball (4), those means comprising at least one first camera (Cam1) and at least one second camera (Cam2) apt to simultaneously acquire a plurality of first images (Img1) and second images (Img2), respectively, of the ball (4), and a central unit (5) that receives the first and second images (Img1, Img2) by means of data reception/transmission means (TX1, TX2, TX5) and that processes those first and second images (Img1, Img2) in predetermined consecutive time-intervals, the central unit (5) calculating the two-dimensional position of the ball (4) in each of those first and second images (Img1, Img2), so as to determine, at each time-interval, the three-dimensional position of the ball (4) by comparing those two-dimensional positions, the target (3) being divided into a plurality of target areas (3'), the central unit (5) being apt to recognize a coordinate (sₜ) at which one of the target areas (3') is intersected by the trajectory (γ) of the ball (4).

## Description

### Application field

The present invention relates to a recreational/ sport apparatus comprising a playing field, on which a target is positioned protruding from a surface of the playing field, and a ball adapted to be shot toward the target.

The present invention also relates to a method for reconstructing the trajectory of a moving ball in the context of a recreational/sport apparatus.

The following description refers to this application field with the only purpose of simplifying its exposition.

### Prior art

As it is well known, there are apparatuses made for recreation and/or training purposes that comprise a target, usually fixed, to hit from a certain distance by means of a specific object, such as for example a ball.

In general, such a recreational/ sport apparatus comprises a shooting zone, in which a user shoots after performing a specific technical movement, and a target zone, suitably spaced out from the shooting zone, in which the target to hit is located.

For example, a recreational/ sport apparatus can be a reconstruction at a reduced scale of a football field, wherein a user can kick a ball toward a goal located at a certain distance, attempting in particular to direct the ball toward specific zones of the goal.

In this type of apparatuses, in which a user tries to hit a target with a ball, there is the need to precisely retrieve shot parameters such as for example the position of the ball when it hits the target, its speed and the like.

Apparatuses are known that comprise sensors positioned at the target, detecting the impact of the ball against it, possibly also determining the impact force, as well as touch-screen targets are known that are capable of detecting the impact zone of the ball. However, these solutions have the drawback of depending on the contact of the ball with the target, which very often can lead to inaccuracies in the detection of the significant shot parameters, as well as to damage the target itself.

Furthermore, it is desirable to precisely reconstruct the trajectory of the ball in real time, from the time of the shot to the time of its arrival at the target, which cannot be easily achieved using normal position and movement sensors.

The technical problem of the present invention is to devise a recreational/ sport apparatus having features such as to overcome the limitations and drawbacks still affecting the known solutions, in particular able to simply and precisely reconstruct the trajectory of a ball shot by a user toward a target, so as to derive in real time all the shot parameters relating to that ball without depending on impact thereof with the target.

### Summary of the invention

The solution idea at the basis of the present invention is to provide a recreational/ sport apparatus wherein two cameras simultaneously film the movement of a ball shot by a user toward a target in a playing field, the images acquired by one camera being combined with the images acquired simultaneously by the other camera so as to precisely reconstruct the three-dimensional positions of the ball and therefore its trajectory, in particular so as to recognize the three-dimensional coordinate at which the ball crosses a specific zone of the target.

On the basis of this inventive idea, the above technical problem is solved by a recreational/ sport apparatus comprising a playing field, on which a target is arranged protruding from a surface of the playing field, and a ball adapted to be shot toward the target, the apparatus being characterized in that it comprises means apt to perform the reconstruction of the trajectory of the ball, those means comprising at least one first camera and at least one second camera apt to simultaneously acquire a plurality of first images and second images, respectively, of the ball, and a central unit that receives the first and second images by means of data reception/transmission means and that processes the first and second images in predetermined consecutive time-intervals, the central unit calculating the two-dimensional position of the ball in each of those first and second images, so as to determine, at each time-interval, the three-dimensional position of the ball by comparing those two-dimensional positions, the target being divided into a plurality of target areas, the central unit being apt to recognize a coordinate at which one of the target areas is intersected by the trajectory of the ball.

More in detail, the invention comprises the following additional and optional features, taken individually or in combination, if necessary.

According to one aspect of the invention, the central unit may be apt to compare, at each time-interval, the two-dimensional position of the ball in each first image of the first camera with the two-dimensional position of that ball in each corresponding second image of the second camera, so as to obtain a triangulation for the reconstruction of the trajectory, the three-dimensional position that provides a minimum triangulation error being compared with an estimate of the three-dimensional position by means of the central unit.

Furthermore, the target may be crossed by the ball and may lie in a plane perpendicular to the surface of the playing field, the central unit being apt to recognize the coordinate at which the trajectory intercepts that plane.

According to another aspect of the present invention, the apparatus may further comprise at least one display device, which comprises suitable data reception/transmission means and is apt to display significant parameters of the shot made by a user, as well as to display a score assigned to the user according to the trajectory of the ball and in particular according to the target area intersected by that trajectory.

According to yet another aspect of the invention, the playing field may comprise a first level, on which the target and the ball are positioned, and a second level, which is positioned below the first level, the first level and the second level being connected by a first passage, which is made at an end portion of the playing field being opposite to a shooting zone of the ball along a longitudinal axis of that playing field, the second level comprising means to return the ball from the first passage to a second passage made at the shooting zone.

It is also noted that the means to return the ball may comprise a sliding channel that connects the first passage and the second passage, the apparatus further comprising suitable conveying means of the ball toward that sliding channel at the first passage, and lifting means of the ball that are arranged in the sliding channel at the second passage, as well as pushing means of the ball apt to push the ball toward the lifting means.

Finally, the apparatus may comprise a lighting system apt to illuminate the playing field without creating shadows of the ball, the lighting system producing light beams pointed toward the playing field from multiple directions.

The present invention also relates to a method for reconstructing the trajectory of a moving ball in the context of a recreational/sport apparatus, the method comprising at least the steps of:
- positioning in a playing field at least one first camera and at least one second camera that film the playing field, in which the ball is shot by a user toward a target protruding from a surface of that playing field;
- acquiring, by means of the first camera and the second camera, a plurality of first images and second images, respectively, of the ball, those first and second images being acquired simultaneously in predetermined consecutive time-intervals;
- sending the first and second images to a central unit;
- calculating in the central unit a two-dimensional position of the ball in each of the first and second images;
- determining, by means of the central unit, a three-dimensional position of the ball with respect to the playing field at each time-interval, by comparing the two-dimensional position of the ball in each first image with the two-dimensional position of the ball in each corresponding second image and performing a triangulation starting from those two-dimensional positions, the three-dimensional position calculated in each of the time-intervals allowing to reconstruct the trajectory of the ball;
- assessing, at each time-interval, the calculated three-dimensional position of the ball with respect to significant coordinates of the playing field; and
- recognizing a coordinate at which the trajectory intercepts a target area of a plurality of target areas into which the target is divided.

According to one aspect of the present invention, the step of determining the three-dimensional position of the ball may comprise a step of eliminating, within each time-interval, first and second images that lead to an excessive triangulation error, so as to keep one pair of images that provides the minimum triangulation error and to calculate the three-dimensional position starting from that pair of images that provides the minimum error.

According to another aspect of the present invention, the presence of the ball in each of the images can be detected through the steps of:
- storing in a memory unit of the central unit a first background image of the playing field, recorded by the first camera, in which the ball is not present, and a second background image of the playing field, recorded by the second camera, in which the ball is not present; and
- detecting a difference between the first and second images and the first and second background images, respectively, areas of the first and second images in which those differences are found being attributed to the presence of the moving ball in the playing field,
images that do not differ from those background images being discarded and not used for calculating the three-dimensional position of the ball.

Furthermore, the method of the invention can comprise a step of comparing, at each time-interval, the calculated three-dimensional position of the ball with an estimate of that three-dimensional position, that estimate being performed starting from three-dimensional positions of the ball calculated in previous time-intervals.

At this regard, the method of the invention can comprise a step of eliminating three-dimensional positions for which a variance with respect to the estimate is greater than a suitable amount that is expressed in centimetres and is preset in the central unit.

It must also be pointed out that the method of the invention may comprise a step of automatically calibrating the first camera and the second camera, the calibration being performed on the basis of a difference between the actual coordinates of specific points of the playing field and the corresponding coordinates of those points as calculated from the acquired images.

Moreover, the method of the invention may further comprise a step of assigning a score to a user according to the target area that is intersected by the trajectory of the ball shot by that user, a null score being assigned in case the trajectory does not intersect any target area of the target and/or in case the trajectory intersects closing means of the playing field.

According to another aspect of the present invention, the step of assigning a score may further comprise a step of calculating and displaying significant shot parameters, those parameters comprising the average speed of the ball and/or the speed of the ball at the target.

Finally, the method of the invention may comprise a step of displaying the score assigned to the user by means of at least one display device. The characteristics and the advantages of the apparatus and of the method according to the invention will become apparent from the following description of an embodiment thereof provided as a nonlimiting example with reference to the accompanying drawings.

### Brief description of the drawings

In those drawings:
- figure 1 schematically shows a recreational/ sport apparatus according to the present invention; and
- figure 2 shows a flowchart that schematically illustrates the subsequent steps of the method according to the present invention.

### Detailed description

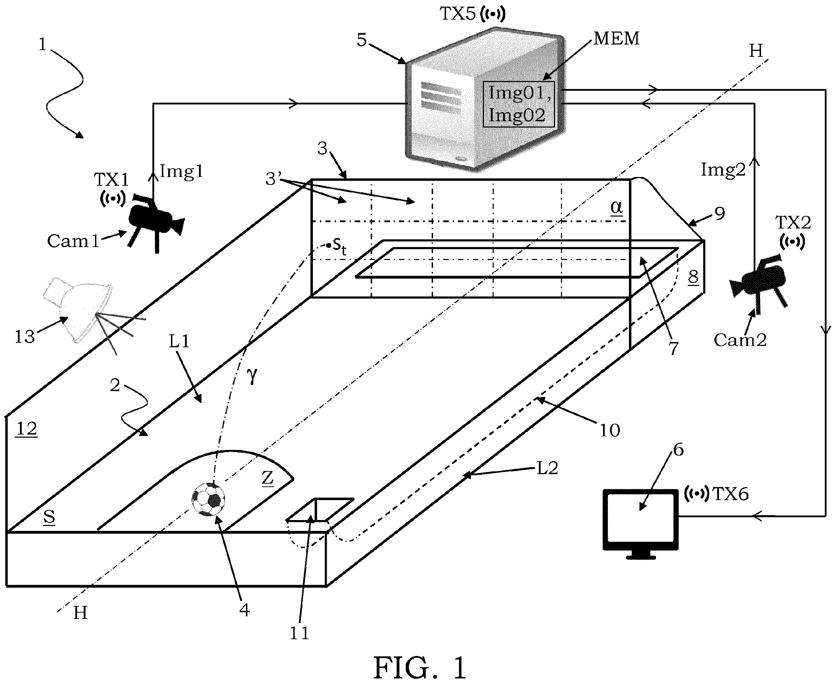

With reference to those figures, and in particular to the example of figure 1, a recreational/sport apparatus is described in the following, that apparatus being globally and schematically identified with 1 and comprising means for reconstructing the trajectory of a ball according to a method that will be illustrated below.

It is worth noting that figure 1 represents a schematic view and is not drawn to scale, but instead it is drawn so as to emphasize the important features of the invention. Moreover, in figure 1, the different elements are depicted in a schematic manner, their shape varying depending on the application desired.

In the following, the apparatus 1 according to the present invention will be described in relation to an example of a preferred application thereof in the context of the football, although such an example should not be considered as limiting the scope of the present invention.

The apparatus 1 can be used by a user just for recreational purposes, but it can also be used by an athlete during training in order to improve specific technical movements. In the former case, the apparatus 1 may allow a competition among different users, to which a score is assigned on the basis of the results obtained, for example on the basis of the accuracy and/or speed of the shot of a ball, as it will be discussed later.

With reference to figure 1, the apparatus 1 comprises a playing field 2, which extends longitudinally along a longitudinal axis H-H.

A target 3 is arranged on the playing field 2, the target 3 being crossed by an object, in particular a ball 4 shot by a user that uses the apparatus 1. More in particular, the target 3 and the ball 4 are positioned on a surface S of the playing field 2, that surface S being an upper surface of the playing field 2 according to the local reference system of figure 1. The target 3 protrudes from the surface S of the playing field 2. In particular, the target 3 lies in a plane α that is perpendicular to the surface S of the playing field 2.

In a preferred embodiment of the present invention, the target 3 is fixed to the surface S of the playing field 2, although other types of targets may be provided.

The surface S of the playing field 2 extends longitudinally along the longitudinal axis H-H and is sized so as to allow the user to get in position at a suitable distance from the target 3 to perform the shoot of the ball 4. It is also possible to identify on the surface S a shooting zone Z, inside which the user shoots the ball 4 toward the target 3, that shooting zone Z being identified by suitable signalling means and being suitably spaced from the target 3.

It is also noted that, according to the present invention, the target 3 is divided into a plurality of target areas 3' to be hit, so that, for example, it is possible to assign to a user a different score depending on the target area 3' that is hit by the ball 4, as will be described later.

In the case of application of the apparatus 1 in the football context, the playing field 2 is in the form of a football field and the target 3 is in the form of a football goal, which lies in the plane α and being divided in the plurality of target areas 3'.

Advantageously according to the present invention, the apparatus 1 comprises means apt to perform the reconstruction of the trajectory γ of the ball 4, which is shot by the user toward the target 3.

In particular, those means comprise at least one first camera Cam1 and at least one second camera Cam2 apt to film the ball 4 that moves toward target 3. The cameras Cam1 and Cam2 are then adapted to acquire, during the movement of the ball 4, a respective plurality of subsequent images or frames Img1 and Img2 of the ball 4, which are sent to a suitable central unit 5. The central unit 5 is suitably connected to those cameras Cam1 and Cam2 and is responsible for the management of the apparatus 1.

The images acquired by the first camera Cam1 1 hereinafter will be referred to as first images Img1, while the images acquired by the second camera Cam2 hereinafter will be referred to as second images Img2.

The central unit 5 can be, for example, a personal computer having a sufficient processing power, that central unit 5 being programmed with a suitable algorithm for the reconstruction of the trajectory γ of the ball 4 shot toward the target 3.

The central unit 5 and the cameras Cam1 and Cam2 are provided with respective data reception/transmission means TX5, TX1 and TX2 in order to communicate and send data with each other. These reception/transmission means may be for example wireless communication means, but other types of communication systems are also possible, for example the cameras Cam1 and Cam2 and the central unit 5 may be connected by means of high speed USB3 data transmission cables.

The cameras Cam1 and Cam2 are suitably arranged in the apparatus 1 in such a way that they both film the playing field 2. In particular, the cameras Cam1 and Cam2 are positioned near the shooting zone Z and frame the playing field 2, including the target 3, in such a way that that they film the ball 4 when it is located a few meters away, preferably seven meters away, from the target 3 and in such a way that they do not film the ball 4 before the shot is made.

Furthermore, the cameras Cam1 and Cam2 are synchronized by the central unit 5, so as to avoid errors in the reconstruction of the trajectory γ of the ball 4.

The central unit 5 comprises a memory unit MEM in which a first background image Img01 is stored, i.e. an image of the playing field 2 in which the ball 4 is not present, that image having been previously recorded by the first camera Cam1 before the shot of the ball 4. Likewise, the memory unit MEM stores a second background image Img02, i.e. an image of the playing field 2 in which the ball 4 is not present, that image having been previously recorded by the second camera Cam2 before the shot of the ball 4.

More precisely, the background images Img01 and Img02 are the result of an average of many images acquired by the cameras Cam1 and Cam2, the number of images through which the average is calculated being such that the presence of moving objects in some of those images does not affect the average itself.

It is therefore possible to check for the presence of the ball 4 by comparing each of the first and second images Img1 and Img2 with the first and second background images Img01 and Img02, respectively, so that when the central unit 5 detects a difference between those first and second images Img1 and Img2 and those first and second background images Img01 and Img02, respectively, the areas of the first and second images Img1 and Img2 where those differences are found are attributed to the presence of the moving ball 4 in the playing field 2. The images comprising the ball 4 are then processed in the central unit 5.

During the complete movement of the ball 4, both cameras Cam1 and Cam2 provide to the central unit 5 a certain number of consecutive images Img1 and Img2, that number depending on the frame rate of the cameras.

In particular, it is possible to acquire a certain number of images Img1 and Img2 within predetermined consecutive time-intervals that can be set at will by means of the algorithm executed in the central unit 5, multiple images Img1 and Img2 being therefore acquired and processed in each time-interval. In other words, the acquisition of the images by the cameras Cam1 and Cam2 is divided into a plurality of consecutive time-intervals, multiple images being acquired in each time-interval.

It is noted that in this specification the term "time-interval" indicates the interval within which a certain number of images Img1 and Img2 is acquired, the overall acquisition therefore being divided into a plurality of consecutive time-intervals, so that the images are acquired in a continuous sequence. In other words, the time axis of the acquisition is divided into consecutive time-intervals, in each of which a certain number of two-dimensional images is acquired.

In greater detail, the images are preferably acquired with a frame rate of 20 fps, the acquired images being processed substantially in real time.

The images acquired in each time-interval by the first camera Cam are simultaneous to the images acquired by the second camera Cam2, i.e. for each image of one camera, an image from the second camera is simultaneously acquired (i.e. at the same instant in time), those images being processed simultaneously.

Conveniently according to the present invention, at each time-interval the first images Img1 of the first camera Cam1 are compared in the central unit 5 with the corresponding second images Img2 of the second camera Cam2, i.e. with the second images Img2 simultaneously acquired (at the same instant in time) by the second camera Cam2, in order to reconstruct the trajectory γ of the ball 4; in other words, the first camera Cam1 and the second camera Cam2 realize a stereoscopic vision system, wherein both cameras Cam1 and Cam2 send to the central unit 5 two-dimensional images of the playing field 2.

More in detail, the central unit 5 is apt to compare the two-dimensional position of the ball 4 in each first image Img1 acquired by the first camera Cam1 with the two-dimensional position of the ball 4 in each corresponding (i.e. simultaneously acquired) second image Img2 acquired by the second camera Cam2, so that, starting from each pair of images sent to the central unit 5, it is possible to calculate the three-dimensional position of the ball 4 with respect to a reference system integral with the playing field 2. In greater detail, the three-dimensional position of the ball 4 for each pair of images Img1 and Img2 is calculated by the central unit 5 by performing a triangulation on the basis of the two-dimensional positions of the ball in each of the images Img1 and Img2. By doing so, for every predetermined time-interval, the central unit 5 calculates a plurality of three-dimensional positions of the ball 4.

It is noted that, by using the algorithm executed in the central unit 5, it is possible to eliminate all the pairs of images Img1 and Img2 that lead to an excessive triangulation error, as it will be illustrated in more detail later.

The pair of images Img1 and Img2 that provides the minimum triangulation error is then used to calculate the actual three-dimensional position of the ball 4 in the corresponding time-interval, with respect to the reference system integral with the playing field 2. By doing so, for each time-interval, a single three-dimensional position is calculated, which position is stored in the memory unit MEM of the central unit 5, so that it is possible to reconstruct the trajectory γ of the ball 4, that trajectory γ being therefore sampled on the basis of the number of predetermined time-intervals.

In other words, for each sampling time-interval, the central unit 5 provides a corresponding three-dimensional position of the ball 4, so as to reconstruct the trajectory γ thereof from the time of the shot until the arrival at the target 3, that trajectory being sampled on the basis of the individual three-dimensional positions calculated in each time-interval.

Moreover, it is noted that the calculation of the three-dimensional position of the ball 4 in a time-interval can be controlled by comparing that three-dimensional position with an estimate thereof, such an estimate being performed starting from the three-dimensional positions calculated in all the previous time-intervals, eliminating three-dimensional positions that are too distant from their estimate, as it will be specified later.

As shown above, the target 3, which lies in the plane α perpendicular to the playing field 2, is divided into a plurality of target areas 3', and the central unit 5 is thus apt to check the target area 3' that has been intersected by the trajectory γ of the ball 4. In fact, it is noted that, suitably according to the present invention, the assessment of which target area 3' has been crossed by the ball 4 does not depend on the physical contact between the ball 4 and the target area 3', but it is possible to reconstruct the trajectory γ of the ball 4 and compute the three-dimensional coordinate at which the trajectory γ intersects the plane α of the target 3 and therefore which target area 3' is intersected by such a trajectory. In other words, the central unit 5 is capable of calculating the coordinate at which the ball 4 reaches the target 3, and therefore is capable of identifying the correct target area 3' reached by the ball 4.

In this way, it is no longer needed to use a target 3 equipped with sensors or to use a touch-screen target.

The subdivision of the target 3 into the plurality of target areas 3' can be shown by means of suitable signalling means, which are such that they do not to interfere with the movement of the ball 4 that crosses the target 3. For example, they can be optical signalling means or thin deformable strips.

Furthermore, the apparatus 1 comprises at least one display device 6, which is suitably connected to the central unit 5 and is adapted to display the result of the shot made by the user, i.e. to display significant parameters of the shot made by the user. In particular, the display device 6 is capable of indicating to the user the target area 3' intersected by the ball 4, as well as other shot parameters such as the average speed of the ball 4 and/or the speed of the ball 4 when it reaches the target 3. The display device 6 is also capable of displaying the reconstructed trajectory γ of the ball 4. The display device 6 is connected to the central unit 5 by means of suitable reception/ transmission means TX6, for example through wireless means or through a wired system.

As pointed out above, each target area 3' is associated with a score to assign to a user, that score varying according to the difficulty of reaching the target area. Consequently, once the trajectory γ of the ball 4 has been reconstructed and the coordinate at which the trajectory γ had intersected target 3 has been identified, the central unit 5 is capable of assigning a relative score to each user that uses the apparatus 1. The score can then be displayed in a window shown on the display device 6, as well as it can be displayed in a further optional display device (not shown in figure 1) also connected to the central unit 5. It is noted again that, suitably, the calculation and the display of the score does not depend on the actual impact of the ball 4 on the target 3.

In an embodiment of the present invention (not shown in the figures), the central unit may comprise a first unit (first personal computer) that receives and processes the data sent by the cameras, and a second unit (second personal computer) to which the data processed by the first unit are sent. For example, the second unit can be apt to graphically represent the outcome of the shot (the trajectory γ). Obviously, it is possible to provide the presence of a single unit that carries out the functions described above. The central unit 5 may also comprise a management unit for the actual management of the apparatus (for example the game advancement).

It is also noted that, when the apparatus 1 is used for recreational purposes, each individual competition begins after a payment has been made. In this regard, it is possible to provide an automatic payment system, which is connected to the central unit 5 and is adapted to receive the payments and to enable users to use the apparatus 1.

Moreover, different game modes may be provided, for example a fixed score mode or a target mode may be provided.

In a preferred embodiment of the present invention, the playing field 2 comprises a first level L1, on which the target 3 and the ball 4 are positioned, and a second level L2, which is positioned below the first level L1 according to the local reference system of figure 1.

In particular, the first level L1 and the second level L2 are connected by a first passage 7, which is made at a portion of the playing field 2 beyond the target 3 according to a direction coming from the shooting zone Z of the ball 4. In other words, with respect to the target 3, the first passage 7 is located at an end portion of the playing field 2 being opposite to the shooting zone Z.

The first level L1 and the second level L2 therefore define a chamber 8, which is accessed, via the first passage 7, by the ball 4 crossing the target 3, the chamber 8 being positioned below the surface S of the playing field 2 and the first passage 7 being such as to allow the passage of the ball 4 once it has passed the target 3.

Furthermore, the apparatus 1 comprises stopping means 9 of the ball 4 capable of slowing or stopping the movement of the ball 4 after it has crossed the target 3 and capable of facilitating the entry of the ball 4 in the first passage 7. For example, the stopping means 9 of the ball 4 can be in the form of strips, preferably made of plastic, suitably sized, spaced out and placed immediately behind the target 3 as seen from the shooting zone Z, so as to slow down the ball and possibly also to prevent its return toward the shooting zone Z. Alternatively, the stopping means 9 may be in the form of a net that stops and collects the ball 4.

Moreover, the apparatus 1 may also comprise closing means 12 (for example panels) of the playing field 2, those closing means 12 being arranged along one or both the larger sides of the surface S and being perpendicular thereto.

Suitably, the second level L2 comprises means to return the ball 4 from the first passage 7 to the shooting zone Z. In this way, using the means to return the ball 4, the ball 4 is capable of returning automatically toward the shooting zone Z once it has entered the first passage 7.

In particular, the means to return the ball 4 comprise a sliding channel 10, which is preferably inclined with respect to the playing field 2, where the ball 4 slides from the first passage 7 to a second passage 11, this second passage 11 being made near the shooting zone Z. In other words, the second passage 11 connects the first level L1 with the second level L2 at the shooting zone Z and enables the ball 4 to return to the first level L1, thus ensuring continuity of use of the apparatus 1.

The apparatus 1 further comprises suitable conveying means (not shown in the figures) of the ball 4 toward the sliding channel 10, these conveying means being positioned at the first passage 7. By way of example, the conveying means may be inclined planes which extend from the edges of the first passage 7 toward the second level L2 and are inclined toward the centre of that passage 7, the lower edge of each of those inclined planes being connected to a corresponding edge of an end of the sliding channel 10.

Furthermore, lifting means of the ball 4 are provided, such lifting means being arranged in the sliding channel 10 at the second passage 11, so as to allow the return of the ball 4 from the lower second level L2 to the upper first level L1.

In order to push the ball 4 from the first passage 7 toward the second passage 11, suitable pushing means of the ball are provided, such pushing means being apt to push the ball 4 along the sliding channel 10 toward the lifting means placed at the second passage 11. By way of example, the above mentioned pushing means may be blowing means located in the sliding channel 10, so that, using one or more suitably calibrated compressed air jets, the ball 4 is pushed from the first passage 7 to the second passage 11, in particular to the lifting means placed at that second passage 11.

Finally, the apparatus 1 comprises a lighting system 13 apt to illuminate the playing field 2 in its entirety without creating shadows of the ball 4. For example, the lighting system 13 can be such as to produce different light beams pointed toward the playing field 2 from multiple directions.

The present invention also relates to a method for reconstructing the trajectory of moving objects, in particular of a ball 4, performed by suitable means of a recreational/ sport apparatus 1.

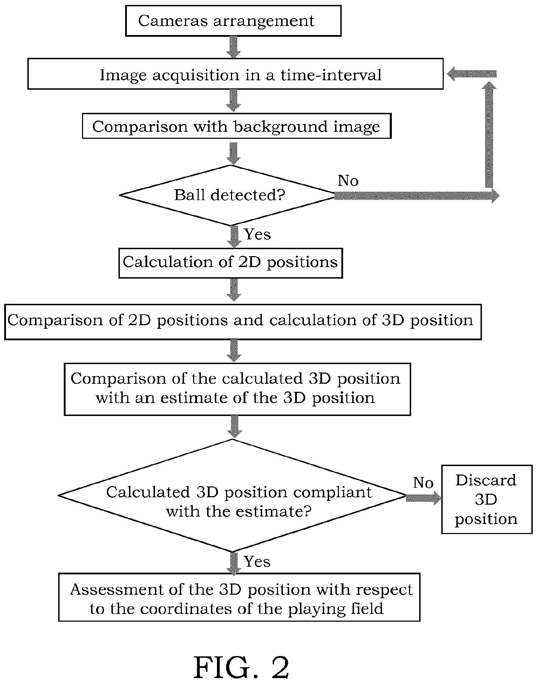

Referring now to the flowchart shown in figure 2, the method of the invention starts with a preliminary step of positioning in a playing field 2 at least one first camera Cam1 and at least one second camera Cam2 that film the playing field 2, in which a user shoots a ball 4 toward a target 3. The target 3 protrudes from a surface S of the playing field 2, in particular it lies in a plane α perpendicular to that surface S. The target 3 is suitably divided into a plurality of target areas 3'.

The method of the invention then comprises a step of acquiring, by means of the first camera Cam1 and the second camera Cam2, a plurality of first images or frames Img1 and second images Img2, respectively, of the ball 4 shot by the user toward the target 3, those images Img1 and Img2 being sent simultaneously to a central unit 5 in a subsequent step of the method, the central unit 5 managing the whole apparatus 1 by means of a suitable algorithm that is executed therein.

Each image Img1, as well as each image Img2, is recorded by the respective cameras Cam1 and Cam2 consecutively, the number of images acquired depending on the frame rate of the cameras Cam1 and Cam2. Furthermore, the first images Img1 and the second images Img2 are acquired simultaneously.

In particular, it is possible to acquire a certain number of images Img1 and Img2 within predetermined consecutive time-intervals that can be set at will by means of the algorithm executed in central unit 5, multiple images Img1 and Img2 being therefore acquired and processed in each time-interval. In other words, the acquisition of the images by means of the cameras is divided into a plurality of time-intervals, multiple images being acquired in each time-interval.

As soon as each image Img1 and Img2 is sent to the central unit 5, the method of the invention provides the execution of a step of calculating in the central unit 5 the two-dimensional position of the ball 4 in each of the first and second two-dimensional images Img1 and Img2, that position being calculated with respect to a reference system common to both cameras Cam1 and Cam2.

Once the two-dimensional position of the ball 4 has been calculated in each pair of images, the central unit 5 performs a step of determining, from each pair of images at each-time interval, the three-dimensional position of the ball 4 with respect to the common reference system, which is integral with the playing field 2. The three-dimensional position is calculated by comparing the two-dimensional position of the ball 4 in each first image Img 1, acquired by the first camera Cam1, with the two-dimensional position of the ball 4 in each corresponding second image Img2, acquired by the second camera Cam2, performing a triangulation starting from those two-dimensional positions.

It is noted that in the present description, the term "corresponding images" means images that are acquired simultaneously (i.e. at the same instant in time) by the two cameras Cam1 and Cam2. As a consequence, in this step of determining, a plurality of three-dimensional positions is calculated at each time-interval starting from the plurality of images Img1 and Img2. The three-dimensional positions calculated in each time-interval therefore make it possible to reconstruct the trajectory γ of the ball 4.

It is noted that, in the calculation of the three-dimensional position of the ball 4, within each time-interval the pairs of first and second images Img1 and Img2 that lead to an excessive triangulation error are eliminated and only one pair of images, i.e. the one that provides the minimum error, is kept.

In particular, the triangulation error is calculated starting from the calculation of the minimum distance between a first straight line leaving the first camera Cam1 and passing through the centre of the ball 4 (in the first images Img1) and a second straight line leaving the second camera Cam2 and passing through the centre of the ball 4 (in the corresponding second images Img2). Obviously, such a distance is equal to zero if the two straight lines intersect exactly in the centre of the ball 4 once the triangulation has been done.

As a consequence, the method comprises a step of eliminating, within each time-interval, first and second images Img1 and Img2 that lead to an excessive triangulation error, greater than a suitable amount that is preset in the algorithm executed in the central unit 5, while keeping one pair of images that provides the minimum error.

Consequently, the trajectory γ of the ball 4 is sampled on the basis of the individual three-dimensional positions calculated in each time-interval.

It should be pointed out that all three-dimensional positions of the ball 4 are calculated with respect to the reference system of the playing field 2, such a reference system being common to both the cameras Cam1 and Cam2.

The method of the invention then comprises a step of comparing, at each time-interval, the three-dimensional position of the ball 4 with an estimate of that three-dimensional position, the estimate being calculated according to a procedure that will be explained in more detail later.

The method then comprises a step of assessing, at each time-interval, the three-dimensional position of the ball 4 with respect to significant coordinates of the playing field 2, such significant coordinates being for example the coordinates of possible closing means 12 that bound the playing field 2 (i.e. its edges), as well as the coordinates of the target 3, in particular of the target areas 3'.

In this way, if in a specific time-interval the trajectory of the ball 4 intersects a target area 3', the method of the present invention allows to recognize the three-dimensional coordinate sₜ at which the trajectory γ intersects that target area 3', which occurs when the three-dimensional position of the ball 4 matches such a coordinate sₜ of the target 3.

In a preferred embodiment of the present invention, the estimate of the three-dimensional position in a specific time-interval is calculated starting from the three-dimensional positions calculated in the previous time-intervals, in particular on the basis of an interpolation of the three-dimensional positions calculated in the previous time-intervals. In even greater detail, the estimate of a certain three-dimensional position is calculated starting from the last two previously calculated three-dimensional positions (i.e. the last and penultimate), the estimate of the position of the ball 4 on an axis of the reference system occurring independently with respect to the estimate of the position on the other axes.

As regards the estimate of the first three-dimensional position, it is based on the requirement that the ball 4 is detected in a reasonable zone inside the playing field 2, for example at less than five meters from the target 3. On the other hand, the estimate of the second position is based on the requirement that the position of the ball 4 does not differ from the calculated first position by more than is allowed by the maximum possible speed of the ball 4 and by the elapsed time. Once the first two positions have been calculated, it is therefore possible to more precisely calculate the estimate for the subsequent positions.

Consequently, the method of the invention comprises the step of eliminating three-dimensional positions that are too distant from their estimate, in particular three-dimensional positions for which a variance with respect to the estimate is greater than an amount that is expressed in centimetres and is suitably preset in the algorithm executed in the central unit 5.

Conveniently, the method of the invention makes it possible to easily verify the presence of the ball 4 in each of the images Img1 and Img2 through the steps of:
- storing in a memory unit MEM of the central unit 5 a first background image Img01of the playing field 2, recorded by the first camera Cam1, in which the ball 4 is not present, and a second background image Img02 of the playing field 2, recorded by the second camera Cam2, in which the ball 4 is not present; and
- detecting a difference between the first and second images Img1 and Img2 and the first and second background images Img01 and Img02, respectively, areas of the first and second images Img1 and Img2 in which those differences are found, being attributed to the presence of the ball 4 moving within the playing field 2.

Consequently, the images Img1 and Img2 that do not differ from the background images Img01 and Img02 are discarded and not used for the calculation of the three-dimensional position of the ball 4.

The method further comprises a step of calibrating the cameras Cam1 and Cam2. In particular, the calibration is performed on the basis of the difference, in the reference system of the playing field, between the actual coordinates of specific points of the playing field 2 (for example the ends of the target 3) and the corresponding coordinates of those points as calculated from the acquired images, wherein such a calibration can possibly be carried out via an automatic procedure.

As noted above, the apparatus 1 may allow a competition among different users and consequently the method of the invention comprises a step of assigning a score to a user according to the target area 3 that is intersected by the trajectory γ of the ball 4. The score can then be displayed by means of at least one display device 6. Obviously a null score is assigned if the trajectory does not intersect any target area 3' of the target 3 or if the ball bounces against possible closing means 12 of the playing field 2, which is detected when a three-dimensional position of the ball 4 matches a coordinate of those closing means 12.

It is noted that the score can be used by a user also as an evaluation of his performance, the apparatus 1 being in that case used as an aid to the training of the user itself.

In addition to the score, the calculation of significant user shot parameters is also provided, such as for example the average speed of the ball 4 and/or its speed at the target 3. That calculation is obviously carried out on the basis of the reconstructed trajectory of ball 4.

In conclusion, the present invention provides a recreational/ sport apparatus equipped with at least two cameras that simultaneously film the movement of a ball shot by a user toward a target in a playing field, the images acquired by one camera being combined with the images acquired simultaneously by the other camera so as to precisely reconstruct the three-dimensional position of the ball and therefore its trajectory, in particular so as to recognize the three-dimensional coordinate at which the ball crosses a certain zone of the target.

Advantageously according to the present invention, such a solution makes it possible to reconstruct the trajectory of the ball in an extremely precise manner, without depending on the physical contact between the ball and the target. This ensures, on the one hand, an extreme accuracy of the detection and, on the other hand, avoids a damage of the target itself. In particular, the high accuracy is guaranteed by the method of the invention thanks to the possibility of discarding positions that are not in agreement with an estimated value.

Furthermore, the possibility of precisely reconstructing the trajectory of the ball allows calculating, in addition to the coordinate where it intersects the target, also other significant shot parameters, such as the speed of the ball.

It should also be noted that, thanks to the calculation of the three-dimensional coordinates of the ball in each time-interval, it is possible to assess whether it bounces against closing means (i.e. the edges) of the playing field, so as to assign a null score to the corresponding shot.

All the detected parameters are also suitably displayed in real time on display devices arranged along the playing field.

Conveniently, there is no need to separately provide the time of the shot, since as soon as the ball enters the zone covered by the cameras, the reconstruction of the trajectory automatically starts, as well as there is no need for a precise and constant shooting position.

The present invention can be implemented with a limited number of means and expedients and the disclosed apparatus can be easily installed on existing apparatuses. In particular, the apparatus of the invention can be easily installed on an existing bowling apparatus, using a large part of its elements and features (for example using the sliding channels of the ball as well as the passages), thus allowing to minimize the manufacturing costs and to maintain flexibility of use, since the apparatus can be also easily reconverted for the game of bowling.

Obviously, a person skilled in the art, in order to meet particular needs and specifications, can carry out several changes and modifications to the apparatus and method described above, all included in the protection scope of the invention as defined by the following claims.

## Claims

1. A recreational/sport apparatus (1) comprising a playing field (2), on which a target (3) is arranged protruding from a surface (S) of said playing field (2), and a ball (4) adapted to be shot toward said target (3), said apparatus (1) being **characterized in that** it comprises means apt to perform the reconstruction of the trajectory (γ) of said ball (4), said means comprising at least one first camera (Cam1) and at least one second camera (Cam2) apt to simultaneously acquire a plurality of first images (Img1) and second images (Img2), respectively, of said ball (4), and a central unit (5) that receives said first and second images (Img1, Img2) by means of data reception/transmission means (TX1, TX2, TX5) and that processes said first and second images (Img1, Img2) in predetermined consecutive time-intervals, said central unit (5) calculating the two-dimensional position of said ball (4) in each of said first and second images (Img1, Img2), so as to determine, at each time-interval, the three-dimensional position of said ball (4) by comparing said two-dimensional positions, said target (3) being divided into a plurality of target areas (3'), said central unit (5) being apt to recognize a coordinate (sₜ) at which one of said target areas (3') is intersected by said trajectory (γ) of said ball (4).

2. The apparatus (1) according to claim 1, **characterized in that** said central unit (5) is apt to compare, at each time-interval, the two-dimensional position of said ball (4) in each first image (Img1) of said first camera (Cam1) with the two-dimensional position of said ball (4) in each corresponding second image (Img2) of said second camera (Cam2), obtaining a triangulation for the reconstruction of said trajectory (γ), the three-dimensional position that provides a minimum triangulation error being compared with an estimate of said three-dimensional position by means of said central unit (5).

3. The apparatus (1) according to claim 1 or 2, **characterized in that** said target (3) is crossed by said ball (4) and lies in a plane (α) perpendicular to said surface (S) of said playing field (2), said central unit (5) being apt to recognize the coordinate at which said trajectory (γ) intercepts said plane (α).

4. The apparatus (1) according to any one of the preceding claims, **characterized in that** it further comprises at least one display device (6), which comprises suitable data reception/transmission means (TX6) and is apt to display significant parameters of the shot made by a user, as well as to display a score assigned to the user according to said trajectory (γ) of said ball (4) and in particular according to the target area (3') that is intersected by said trajectory (γ).

5. The apparatus (1) according to any one of the preceding claims, **characterized in that** said playing field (2) comprises a first level (L1), on which said target (3) and said ball (4) are positioned, and a second level (L2), which is positioned below said first level (L1), said first level (L1) and said second level (L2) being connected by a first passage (7), which is made at an end portion of said playing field (2) being opposite to a shooting zone (Z) of said ball (4) along a longitudinal axis (H-H) of said playing field (2), said second level (L2) comprising means to return said ball (4) from said first passage (7) to a second passage (11) made at said shooting zone (Z).

6. The apparatus (1) according to claim 5, **characterized in that** said means to return said ball (4) comprise a sliding channel (10) that connects said first passage (7) and said second passage (11), said apparatus (1) further comprising suitable conveying means of said ball (4) toward said sliding channel (10) at said first passage (7), and lifting means of said ball (4) that are arranged in said sliding channel (10) at said second passage (11), as well as pushing means of said ball (4) apt to push said ball (4) toward said lifting means.

7. The apparatus (1) according to any one of the preceding claims, **characterized in that** it comprises a lighting system (13) apt to illuminate said playing field (2) without creating shadows of said ball (4), said lighting system (13) producing light beams pointed toward said playing field (2) from multiple directions.

8. A method for reconstructing the trajectory of a moving ball (4) in the context of a recreational/sport apparatus (1), said method comprising at least the steps of:
- positioning in a playing field (2) at least one first camera (Cam1) and at least one second camera (Cam2) that film said playing field (2), in which said ball (4) is shot by a user toward a target (3) protruding from a surface (S) of said playing field (2);
- acquiring, by means of said first camera (Cam1) and said second camera (Cam2), a plurality of first images (Img1) and second images (Img2), respectively, of said ball (4), said first and second images (Img1, Img2) being simultaneously acquired in predetermined consecutive time-intervals;
- sending said first and second images (Img1, Img2) to a central unit (5);
- calculating in said central unit (5) a two-dimensional position of said ball (4) in each of said first and second images (Img1, Img2);
- determining, by means of said central unit (5), a three-dimensional position of said ball (4) with respect to said playing field (2) at each time-interval, by comparing the two-dimensional position of said ball (4) in each first image (Img1) with the two-dimensional position of said ball (4) in each corresponding second image (Img2) and performing a triangulation starting from said two-dimensional positions, the three-dimensional position calculated in each of said time-intervals allowing to reconstruct the trajectory (γ) of said ball (4);
- assessing, at each time-interval, said calculated three-dimensional position of said ball (4) with respect to significant coordinates of said playing field (2); and
- recognizing a coordinate (sₜ) at which said trajectory (γ) intercepts a target area (3') of a plurality of target areas into which said target (3) is divided.

9. The method according to claim 8, wherein said step of determining said three-dimensional position of said ball (4) comprises a step of eliminating, within each time-interval, first and second images (Img1, Img2) that lead to an excessive triangulation error, so as to keep one pair of images that provides the minimum triangulation error and to calculate said three-dimensional position starting from said pair of images that provides said minimum error.

10. The method according to claim 8 or 9, wherein the presence of said ball (4) in each of said images (Img1, Img2) is detected through the steps of:
- storing in a memory unit (MEM) of said central unit (5) a first background image (Img01) of said playing field (2), recorded by said first camera (Cam1), in which said ball (4) is not present, and a second background image (Img02) of said playing field (2), recorded by said second camera (Cam2), in which said ball (4) is not present; and
- detecting a difference between said first and second images (Img1, Img2) and said first and second background images (Img01, Img02), respectively, areas of said first and second images (Img1, Img2) in which said differences are found being attributed to the presence of said moving ball (4) in said playing field (2),
images (Img1, Img2) that do not differ from said background images (Img01, Img02) being discarded and not used for calculating the three-dimensional position of said ball (4).

11. The method according to any one of the claims from 8 to 10, further comprising a step of comparing, at each time-interval, the calculated three-dimensional position of said ball (4) with an estimate of said three-dimensional position, said estimate being performed starting from three-dimensional positions of said ball (4) calculated in previous time-intervals, said method further comprising a step of eliminating three-dimensional positions for which a variance with respect to said estimate is greater than a suitable amount that is expressed in centimetres and is preset in said central unit (5).

12. The method according to any one of the claims from 8 to 11, further comprising a step of automatically calibrating said first camera (Cam1) and said second camera (Cam2), said calibration being performed on the basis of a difference between the actual coordinates of specific points of said playing field (2) and the corresponding coordinates of said points as calculated from said acquired images.

13. The method according to any one of the claims from 8 to 12, further comprising a step of assigning a score to a user according to the target area (3') that is intersected by said trajectory (γ) of said ball (4) shot by said user, a null score being assigned in case said trajectory (γ) does not intersect any target area (3') of said target (3) and/or in case said trajectory (γ) intersects closing means (12) of said playing field (2).

14. The method according to claim 13, wherein said step of assigning a score further comprises a step of calculating and displaying significant shot parameters, said parameters comprising the average speed of said ball (4) and/or the speed of said ball (4) at said target (3).

15. The method according to claim 13 or 14, further comprising a step of displaying said score assigned to said user by means of at least one display device (6).
